(19) **Europäisches Patentamt**
**European Patent Office**
**Office européen des brevets**

(11) **EP 2 217 030 B1**

(12) **EUROPEAN PATENT SPECIFICATION**

(45) Date of publication and mention
of the grant of the patent:
**31.08.2011 Bulletin 2011/35**

(51) Int Cl.:
**H04W 74/08** $^{(2009.01)}$

(21) Application number: **09152159.1**

(22) Date of filing: **05.02.2009**

(54) **Adaptively setting the carrier sense threshold**

Adaptives Einstellen des Trägerabfrageschwellwerts

Configurer adaptativement le seuil de détection de la porteuse

(84) Designated Contracting States:
**DE GB**

(43) Date of publication of application:
**11.08.2010 Bulletin 2010/32**

(73) Proprietor: **NTT DoCoMo, Inc.**
**Tokyo (JP)**

(72) Inventors:
• **Scalia, Luca**
**81377, Munich (DE)**
• **Widmer, Joerg**
**81539, Munich (DE)**
• **Aad, Imad**
**80689, Munich (DE)**

(74) Representative: **Betten & Resch**
**Patentanwälte**
**Theatinerstrasse 8**
**80333 München (DE)**

(56) References cited:
**WO-A-2007/121340**   **US-A1- 2005 129 051**
**US-A1- 2005 239 411**   **US-A1- 2007 242 621**

• **PETROVA M ET AL: "Interference Measurements on Performance Degradation between Colocated IEEE 802.11g/n and IEEE 802.15.4 Networks" NETWORKING, 2007. ICN '07. SIXTH INTERNATIONAL CONFERENCE ON, IEEE, PI, 22 April 2007 (2007-04-22), page 93, XP031214544 ISBN: 978-0-7695-2805-2**

**Description**

**FIELD OF THE INVENTION**

The present invention relates to a method and an apparatus for adaptively setting the carrier sense threshold.

**BACKGROUND OF THE INVENTION**

Over the last few years there could be observed an impressive boost in the deployment of IEEE 802.11 public hot-spots, community-owned networks, city-wide mesh networks and private WiFi-enabled ADSL subscriptions, which has strongly increased interference levels in the small portion of unlicensed ISM 2.4 GHz Band assigned for IEEE 802.11 WLAN operation. In addition, the ISM band is also shared among non-cooperative people/devices, e.g. Bluetooth, microwave ovens, etc., which inevitably further degrades IEEE 802.11 wireless connectivity.

Nevertheless, the concept of network planning in IEEE 802.11 has only been recently considered for private-companies network deployments, whereas the vast majority of WLAN deployments usually occurs in a completely unplanned manner. IEEE 802.11 MAC was originally not intended to cope with dense APs/network deployments, but rather for providing connectivity within small isolated clusters of wireless devices.

IEEE 802.11b/g PHY modes only support three orthogonal channels, thus leaving little room for performance improvements through frequency reuse and dynamic frequency selection (DFS) algorithms. Therefore, the IEEE 802.11 protocol manages external interference by simply using the Physical Carrier Sense (PCS) function, which lets any station defer from channel access until other ongoing frame exchanges are terminated.

However, as will be discussed later, out-of-band interference originating from non-adjacent channels, in certain circumstances, can cause improper reactions of the PCS function that may lead to unfair throughput repartition or total denial of service. Before going deeper into the problem, at first there will be provided an overview of the PCS procedure implemented in commercial WLAN cards.

Now there will be explained the IEEE 802.11 Physical Carrier Sense (PCS) function.

Physical Carrier Sense (PCS) is the function that is in charge of detecting if a station has to defer or not the channel access procedure in order to not interfere with other ongoing transmissions. PCS strictly depends on the Clear Channel Assessment (CCA) module implemented at the physical layer. The CCA module determines the busy/idle status of the channel by measuring the amount of received energy that is processed by the Radio-Frequency (RF) module of the WLAN card.

CCA can be configured differently depending on the "meaning" that it gives to this amount of received energy. Specifically, for DSSS PHYs, CCA can issue a busy channel event notification (i) if "any signal energy" detected on the channel exceeds the CST (CCA mode 1); (ii) if "any valid 802.11 modulated signal" (CCA mode 2) is detected on the channel; (iii) if "any valid 802.11 modulated signal" detected on the channel exceeds the CST (CCA mode 3).

PCS is thus an effective mechanism to avoid collisions between concurrent stations that may sense each other but that, because of distance or fading reasons, cannot properly decode the transmitted frame. In addition, when used in modes 2 or 3, it also allows the receiver to be less affected by interference produced by other non-802.11 devices emitting on the same operating channel. Modes 2 and 3 are commonly implemented in commercial WLAN cards.

According to the IEEE 802.11 standard, channel status assessment is related to PCLP (Physical Layer Convergence Protocol) preamble detection. IEEE 802.11 PLCP preamble is sent by using the most robust modulation scheme available at the physical layer and contains information necessary for synchronization (pilot symbols) plus a CRC-16 checksum to verify PLCP header integrity. Three error possibilities may occur at the physical layer: (1) carrier synchronization is lost, (2) CRC-16 parity check on PLCP header fails or (3) no Starting Frame Delimiter (SFD) is found.

Once synchronization with the received frame is established, the medium status is set to BUSY whenever the received amount of energy exceeds the CST. The receiver will now begin searching for the SFD. If it is not found (error type 3), or PLCP header integrity via CRC-16 parity check fails (error type 2), the medium status is reset to IDLE. If SFD is found and PLCP header check is successful, the "LENGTH" field of PLCP header is used to set the amount of time the MAC has to defer before resuming with the medium access procedure. If synchronization is lost during frame reception (error type 1), the status of the medium will be kept on busy, according to the acquired "LENGTH" field value.

It should be noted that this deferral is kept even though (i) the rate of the received frame, indicated in the "DATARATE" field of PLCP header, is not supported by the WLAN card or (ii) the PHY service type indicated in the "SERVICE" field of PCLP header is outside of IEEE 802.11 DSSS PHY specifications.

Once PLCP preamble detection and SFD detection are successful, and all the PLCP header fields are supported by the receiver, the frame is passed to the MAC layer for processing. Whenever CRC-32 check related to MAC header fails, a MAC error event occurs.

Whenever an error event occurs, IEEE 802.11 MAC assumes a transmission failure occurred on the channel, and adopts EIFS (Extended Inter Frame Space) timing plus Back-off before resuming channel access procedure. According to the IEEE 802.11 standard, EIFS deferral is large enough to guarantee any ongoing detected frame exchange is completed. EIFS is equal to an ACK timeout plus a DIFS time.

The PCS range is defined as the area where nodes' transmissions can trigger the CCA busy channel event notification. The PCS range varies according to the CST value: the higher the CST value, the higher the energy required to trigger a busy channel event, and the lower the area where other nodes transmissions can exceed this threshold.

Common IEEE 802.11 cards may often erroneously reveal the presence of out-of-band signals (detected on a non-adjacent channel or due to cordless phones or Bluetooth devices) as valid IEEE 802.11 modulated ones, thus causing either inopportune channel access deferrals or even physical error events that force EIFS waiting. Proper PCS operations, however, should not trigger busy channel notifications in the above conditions. This means that receiver circuitry is affected by errors, but also that CST settings expose WLAN cards to much interference.

The carrier sense function therefore is often too conservative in terms of channel access deferral, and causes performance degradation or, even worse, complete denial of service, especially in the very realistic scenario of unplanned AP deployments.

Now there will be explained an interference phenomenon which may be called the Exposed-Channel Phenomenon.

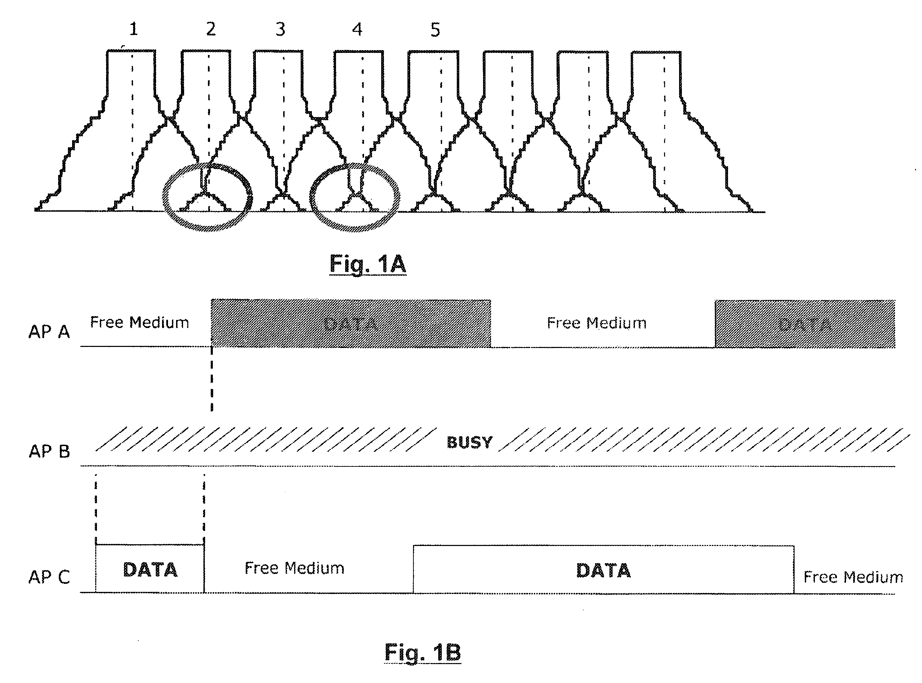

Fig. 1A shows a situation where there are three access points, access point A operating on channel 3, access point B operating on channel 5, and access point C operating on channel 7. It can be seen from Fig. 1 that while there is a partial overlap between channel 1 and channel 3 and also between channel 5 and channel 3, there is virtually no overlap between channels 3 and 7. This means that they are effectively deaf to each other, and therefore their communications may overlap in time. However, if they overlap in such a way that they leave no empty time between them, they may block the communication of channel 3 if the overlap is such that the signal strength sensed by channel 3 exceeds the set carrier sense threshold CST, so that channel 3 considers the channel to be busy and refrains from transmission. This is schematically illustrated in Fig. 1B, were the free medium in channels 3 and 7 is located in time in such a way that the access point B always considers its channel 3 to be busy. This may be called the "exposed channel phenomenon".

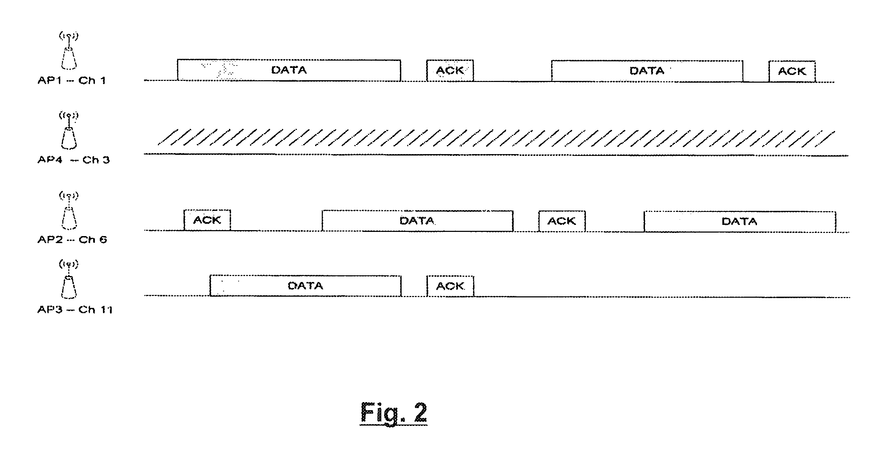

Figure 2 provides an overview of the phenomenon. In the figure, there are 3 APs placed in nearby locations (for example, for three different ADSL subscribers located in different apartments) all operating on three orthogonal channels provided by IEEE 802.11b/g physical layer, namely, channels 1, 6 and 11. The bandwidths of these channels do not overlap at all, and thus APs or STAs operated simultaneously on these channels neither hear each-others' transmissions, nor do they interfere with each other. Now another AP (AP4 in the figure) - or equivalently a STA - is placed in a nearby location. As often happens for some commercially available APs, they could be statically configured on a randomly picked IEEE 802.11b/g channel, or could run the LCCS (Least Congested Channel Search) channel selection algorithm, which automatically would set the AP to operate on the least interfered channel. In the present scenario, it is assumed that the new AP4 is set or automatically selects channel 3 for its operation. It should be noted that the same problem as explained later would also occur if AP4 would be set to e.g. channel 8.

With respect to AP1 and AP2, AP4 perceives non-adjacent channel interference either from channel 1 (where AP1 operates), or from channel 6 (where AP2 operates). Such interference can cause the physical layer to issue a CCA busy channel event notification to the MAC layer. Experimental results validate this assumption.

As it is evident from the figure, this is the worst choice AP4 can ever do. In fact, since AP1 and AP2 operate in a completely unsynchronized manner (the two APs are set on orthogonal channels and do not hear each-other), in case of saturated traffic (e.g., P2P or FTP traffic), if their transmissions are individually able to exceed AP4 CST, this AP will never be given a chance of sensing the channel as free because of the concurrent AP1/AP2 channel interference.

This would cause it to indefinitely defer the medium access procedure. As a consequence, AP4 is blocked and its associated users never get the chance to receive incoming data. This is an example, in a very common and real scenario, of what may be called "the exposed-channel" problem.

The same phenomenon could even occur when multiple APs and/or STAs on non-adjacent channels jointly concur to trigger the busy channel event notification by the CCA function.

In these conditions, CST is frequently exceeded due to highly interfering signals that not only cause WLAN card deferrals because of CS, but also will cause channel access procedure resuming after an EIFS time. The multiple APs/STAs scenario is even more general than the one considered in this example.

There are other situations in which the same phenomenon could occur, without necessarily implying a channel allocation pattern as the one reported on Fig. 2. For example, when APs or STAs operated on adjacent channels are located far away from the "exposed-channel" AP or STA, their contribution in terms of interference could be comparable to the one of APs and STAs operated on non-adjacent but partially overlapping channels but located in a nearer location.

The occurrence of the "exposed channel" problem is related to the traffic generation rate of the devices operated on non-adjacent but partially overlapping channels. Whenever their source rate is able to saturate the correspondent channel capacity, the "exposed channel" terminal will be blocked by the continuous transmissions of these APs or STAs that will cause its channel to be busy all the time long. However, even in more relaxed network conditions (when APs or STAs on non-adjacent but partially overlapping channels don't saturate their channel capacity, i.e. they don't transmit continuously), the "exposed channel" problem is likely to occur. The "exposed channel" problem is in fact related to the busy time that the "exposed channel" node senses on its own channel: when the modulation data rate of the APs or STAs operated on non-adjacent but partially overlapping channels gets lower (and thus the correspondent packet duration gets higher), the channel busy time experienced by the "exposed channel" node gets higher and higher and consequently its channel access probability gets lower because even though the interfering nodes don't saturate their own channel.

One may conclude that the "exposed channel" may frequently occur in those scenarios where low modulation data rates are used (in this case, a lower traffic generation rate implies a channel occupancy time that becomes longer because of the significant increment in the packet duration) and/or multiple APs or STAs are operated on those non-adjacent but partially overlapping channels. In addition, lower modulation data rates also imply higher spatial coverage, thus increasing the probability that "exposed channel" phenomena may occur on nodes located in farther zones. The use of low modulation rates is often caused by the adoption of rate adaptation algorithms, which in general adjust the modulation scheme according to the channel condition and packet error rates, which are inherently related to that.

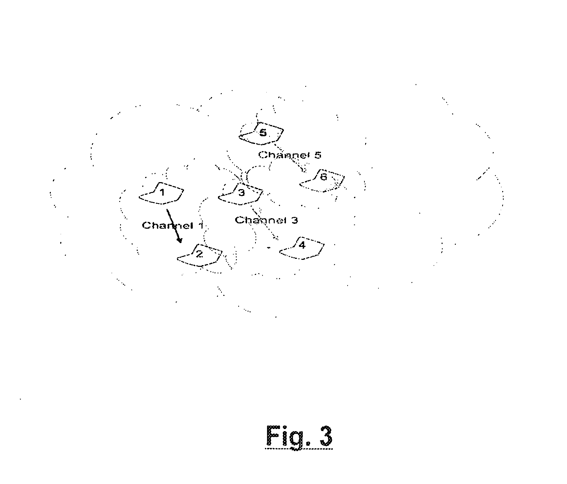

The exposed-channel phenomenon was evaluated regarding its impact on performance in a real experimental test-bed. For the measurements there were used 6 ad-hoc stations connected as shown in Fig. 3. Stations 1 and 2 were deployed on channel 1 to form ad-hoc network "WLAN_1"; similarly, stations 3 and 4 were deployed on channel 3 to form ad-hoc network "WLAN_2"; finally, stations 5 and 6 were deployed on channel 5 to form ad-hoc network "WLAN_3". Stations on channels 1 and 5 were configured to operate at the fixed data rate of 54Mbps. As was discussed before, the choice of high data rates reduces the possibility of the occurrence of the exposed channel phenomenon. Stations on channel 3 were 802.11b stations operating at the fixed data rate of 11Mbps. The transmission power used at all stations was set to 10 dBm, that is much smaller than the default value configured on commercial WLAN cards, i.e. 17 or 18 dBm. The "iperf" traffic generator was used to saturate available bandwidth on all channels. Specifically, one Iperf client was set on stations 1, 3 and 5. Correspondingly, an Iperf server was set respectively on stations 2, 4, 6.

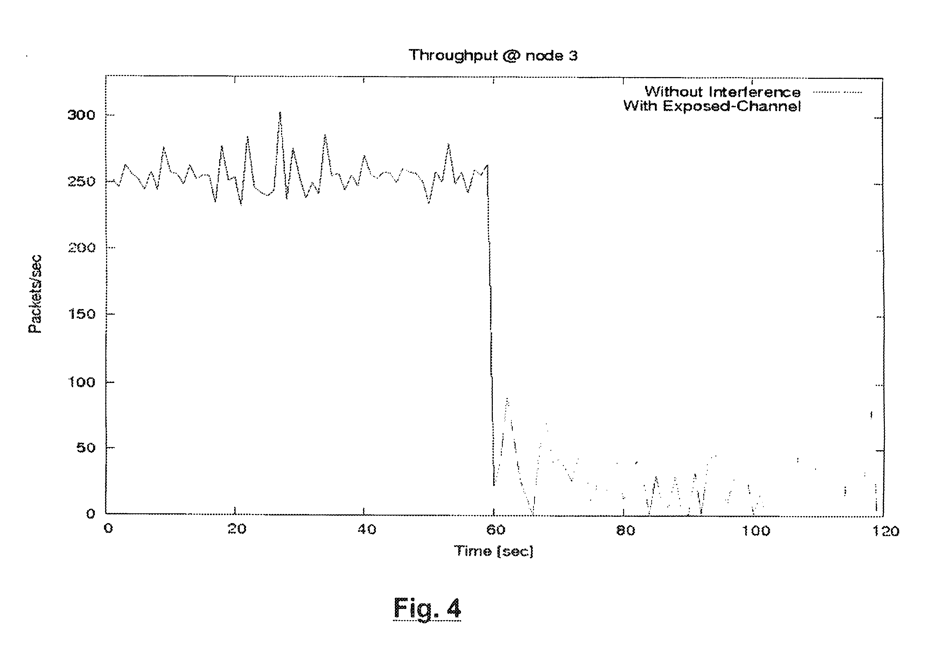

Fig. 4 reports throughput experienced by station 3 without interference and in presence of interfering nodes on channels 1 and 5 respectively. Specifically, in the first 60 seconds of the experiment, stations 3 and 4 were let exchange data in a basically interference-free environment. As it is observable from the figure, on average, these stations are able to exchange approximately 250 packets per second. After 60 seconds, traffic was enabled on channels 1 and 5. As it is evident from the figure, the throughput experienced by station 3 drops to unacceptable values (on average, less than 20 packets per second) despite the reduced transmission power used on channels 1 and 5. This simple experiment outlines how strongly the exposed-channel phenomenon can affect performance, even in a low load scenario as the one deployed here

It is therefore an object of the invention to provide a mechanism which can reduce the negative effects of the exposed channel phenomenon.

Prior art document US 2005/0129051 A1 provides apparatuses and methods for dynamically adjusting carrier sensing threshold levels in a wireless, such as CSMA, system. A station may use the carrier sensing measurement made in normal CSMA operation to determine a threshold level for the local station, and transmit the determined level to other stations in the system. The station also receives similar information from other stations in the system and determines, based at least in part on the information received and the local determined threshold level, an optimal carrier sensing threshold level.

The publication "Interference Measurements on Performance Degradation between Colocated IEEE 802.11g/n and IEEE 802.15.4 Networks" NETWORKING, 2007, ICN '07, SIXTH INTERNATIONAL CONFERENCE ON IEEE, PI, 22 April 2007 (2007-04-22), page 93, by Petrova M et al. discloses that high levels of network traffice interference from IEEE 802.11g and pre-standard IEEE 802.11n products have disastrous impact on the performance of IEEE 802.15.4 as well as other low-power 2.4 GHz ISM band technologies. This indicates that low-power building automation, consumer electronics and sensor networks may be vulnerable to the interference from IEEE 802.11n high-data rate WLAN deployments.

## SUMMARY OF THE INVENTION

According to one embodiment there is provided a method for adaptively setting the carrier sense threshold of a node in a wireless network having a plurality of channels, said node operating on certain one of said channels, said method comprising: measuring by said node the interference level in at least one channel which is non-adjacent to the operating channel of said node;
setting the carrier sense threshold of said node to a value larger than said measured interference level of said non-adjacent channel.

The measurement of the interference level of a non-adjacent node allows the determination whether the node is experiencing the exposed channel phenomenon. Consequently the carrier sense threshold may then be adapted by increasing it to a value larger than the interference level of the no-adjacent channel. This reduces the interfering influence of the non-adjacent channel on the operating channel of the node.

According to one embodiment said interference level is measured for a plurality of non-adjacent channels of said node, and said carrier sense threshold of said node is set to a value larger than the maximum of said measured interference values.

This enables to take into account multiple non-adjacent channels, and the most significant of them is considered for adjusting the carrier sense threshold.

According to one embodiment said carrier sense threshold is changed from its current value only if more than one non-adjacent channels have a interference value larger than the current carrier sense threshold.

This is a enables to whether the exposed channel condition actually is present by checking whether the interference level of more than one non-adjacent channels is beyond the current carrier sense threshold. According to a particular embodiment this has to be the case for two non-adjacent channels on opposite sides of he operating channels, e.g. on X-2 and X+2. Only if the criterion is fulfilled (=the exposed channel phenomenon is judged to exist) and adaptation of the CST is performed.

According to one embodiment the method further comprises:

measuring the interference level of the adjacent channels and/or of said operating channel; and
setting said carrier sense threshold to a value smaller than the minimum interference value measured for said adjacent channels and/or said operating channel which is larger than a certain threshold.

This takes into account the interference level on the adjacent channels and/or on the operating channel. It avoids to set the CST higher than the smallest interference level of them. To take into account that the interference level may also be zero, the smallest level of them is only considered if it is beyond a certain threshold, e.g. beyond the current CST.

According to one embodiment said carrier sense threshold re-setting is performed only if the current carrier sense threshold is below the minimum interference level of said non-adjacent channels and/or own channel which is beyond a certain threshold.

This avoids setting the CST beyond a level which would disturb the non-adjacent channels and the operating channel.

According to one embodiment the method further comprises:

measuring the interference level of a plurality of non-adjacent channels;
re-setting the carrier sense threshold such that it is set beyond the maximum value of the interference levels measured for said non-adjacent channels, and below the minimum interference value measured for adjacent channels and the operating channel itself which is larger than a certain threshold.

This sets the CST in a value range between the maximum interference level of non-adjacent channels and the minimum interference level of adjacent channels/own channel, however such a minimum value is only taken into account if it is larger than a certain threshold. This allows to neglect those adjacent or own channels where there is effectively no communication which means that these channels are effectively free. This can be taken into account by using the minimum interference value of adjacent/own channels only if this minimum is beyond a certain threshold thereby indicating that the channel indeed is used and not free.

According to one embodiment said measured minimum interference level of adjacent channels and/or the operating channel is corrected by a correction factor smaller than one before it is used for determining the new value to which the carrier sense threshold is set; and/or
said measured maximum interference level of non-adjacent channels is corrected by a correction factor smaller than one before it is used for determining the new value to which the carrier sense threshold is set.

This takes into account for the impact of the adjacent channels and the non-adjacent channels on the operating channel.

According to one embodiment instead of setting said carrier sense threshold directly to a value larger than the maximum interference value of non-adjacent channels, said carrier sense threshold is incrementally increased until it is determined that the impact of the interference of non-adjacent channels on said operating channel has improved.

This enables another way of reducing the exposed channel phenomenon, namely by incrementally increasing the CST until it is found that the effect of the non-adjacent channel interference has decreased to an acceptable level. E.g. there may be an increase of the CST, then a measurement of the interference effect, e.g. by measuring the interference level of non-adjacent channels, if this reveals a still significant interference effect the CST is further increased, and so on, until the effect of the interference is found acceptable. Another possibility could also be to measure e.g. the number of busy time slots to check whether the interference effect has become acceptable. E.g. if their number is below a certain acceptable value the interference is judged to be not significant anymore.

According to one embodiment there is provided an apparatus for adaptively setting the carrier sense threshold of a node in a wireless network having a plurality of channels, said node operating on certain one of said channels, said apparatus comprising:

a module for measuring by said node the interference level in at least one channel which is non-adjacent to the operating channel of said node;
a module for setting the carrier sense threshold of said node to a value larger than said measured interference level of said non-adjacent channel.

According to one embodiment said carrier sense threshold is changed from its current value only if more than one non-adjacent channels have a interference value larger than the current carrier sense threshold.

According to one embodiment the apparatus further comprises:

a module for measuring the interference level of the adjacent channels and/or of said operating channel; and
a module for setting said carrier sense threshold to a value smaller than the minimum interference value measured for said adjacent channels and/or said operating channel which is larger than a certain threshold.

According to one embodiment the apparatus said carrier sense threshold re-setting is performed only if the current carrier sense threshold is below the minimum interference level of said non-adjacent channels and/or own channel which is beyond a certain threshold.

According to one embodiment the apparatus further comprises:

a module for measuring the interference level of a plurality of non-adjacent channels;
a module for re-setting the carrier sense threshold such that it is set beyond the maximum value of the interference levels measured for said non-adjacent channels and below the minimum interference value measured for adjacent channels and the operating channel itself which is larger than a certain threshold.

According to one embodiment said measured minimum interference level of adjacent channels and/or the operating channel is corrected by a correction factor smaller than one before it is used for determining the new value to which the carrier sense threshold is set; and/or

said measured maximum interference level of non-adjacent channels is corrected by a correction factor smaller than one before it is used for determining the new value to which the carrier sense threshold is set.

According to one embodiment there is provided a computer program comprising computer program code which when being executed on a computer enables said computer to carry out a method according to one the embodiments of the invention.

## DESCRIPTION OF THE DRAWINGS

Figs. 1A, 1B and 2 schematically illustrate the exposed channel phenomenon.
Fig. 3 schematically illustrates a configuration where embodiments of the invention may be used.
Fig. 4 shows the effect of the exposed channel phenomenon.
Fig. 5 illustrates an interference condition of an exposed channel.
Figs. 6 and 7 schematically illustrate a setting of a CST according to embodiments of the invention.
Fig. 8 illustrates a condition where a resetting is not useful.
Fig. 9 shows a flowchart illustrating an embodiment of the invention.

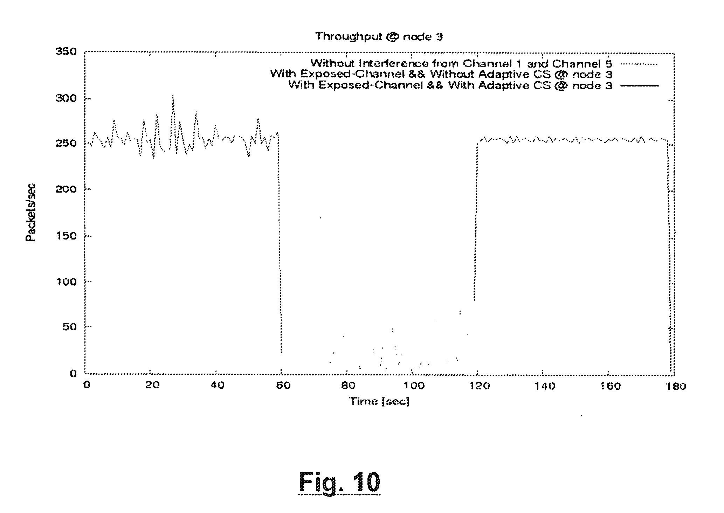

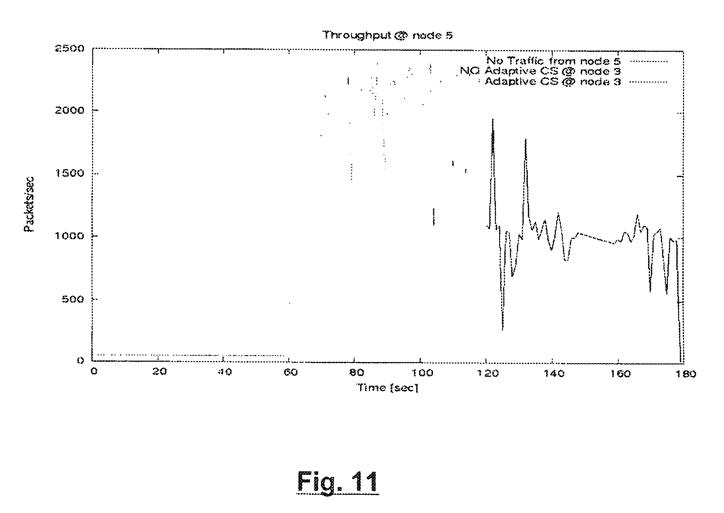

Fig. 10 and 11 illustrate experimental results of the usage of an embodiment of the invention.

## DETAILED DESCRIPTION

Before describing embodiments of the invention, at first some terms used in the following description are explained.

AP        Access Point
STA      Station
MAC     Medium Access Control

| CS | Carrier Sense |
|---|---|
| PS | Power Save |
| RSSI | Receiver Signal Strength Indicator |
| EIFS | Extended Inter Frame Space |
| PHY | Physical Layer |
| DSSS | Direct Sequence Spread Spectrum |
| CRC | Cyclic Redundancy Code |
| PLCP | Physical Layer Convergence Protocol |
| IBSS | Independent Basic Service Set |
| SFD | Starting Frame Delimiter |
| PCS | Physical Carrier Sense |
| CST | Carrier Sense Threshold |
| CCA | Clear Channel Assessment |
| NP | Network Provider |
| NO | Network Operator |
| LCCS | Least Congested Channel Search |

In one embodiment the proposed solution is based on the local adaptive setting of the Carrier Sense Threshold (CST) at APs and STAs that experience extremely low throughput performance due to exposed-channel phenomenon. The adaptive setting of the CST according to embodiments of the invention may be performed by any node of a wireless network, e.g. by an Accesspoint or by any station of the wireless network. In one embodiment there is no correlation between channel conditions at sender and receiver. When exposed channel phenomena occur, they cause WLAN stations to indefinitely defer channel access because of excessively conservative carrier sense configuration. This inevitably prevents any potential sender to start any data transfer even though the intended receiver would be able to correctly process any incoming frame.

The proposed adaptive carrier sense algorithm in one embodiment provides a method to set the Carrier Sense Threshold at the exposed-channel AP or STA to a level where it is "deaf" to interference either from APs and/or STAs operated on non-adjacent channels.

According to one embodiment the proposed mechanism further comprises a method to detect "the exposed-channel" condition at the AP or STA.

To simplify the description of the solution, herein there is only referred to the network scenario in which interfering signals come from APs and/or STAs operated on non-adjacent but partially overlapping channels.

Through this mechanism, any AP or STA that is strongly exposed to activities of surrounding networks operated on partially overlapping non-adjacent channels, will be enabled to initiate frame exchanges with other peers, whereas the default CST setting would have prevented them from doing that. The CST adaptation method will thus increase the overall number of simultaneous (overlapping) transmissions that occur in the considered network environment, thus causing a higher interference level at the receiver side.

Successful data reception at the destination nodes and successful ACK reception at the exposed-channel AP or STA could then suffer from collisions due to overlapping transmissions. However, WLAN radios able to successfully demodulate frames subject to collisions, even if the relative strengths of the colliding signals are comparable.

According to one embodiment there is leveraged the capture effect properties of WLAN cards to achieve this goal. In presence of overlapping signals, thanks to capture, WLAN devices are able to synchronize to the signal received with the strongest SINR (Signal to Interference-Noise Ratio), regardless of when they occur.

Transmissions from non-adjacent partially overlapping channels will be generally perceived as weak signals (low SNR) at the receiver circuitry of APs or STAs operated on exposed-channels, and thus either data or ACK frame receptions will be extremely robust to errors.

The CST adaptation policy should preferably guarantee the exposed-channel AP or STA, after CST adjustment, is still able to detect co-channel and adjacent channels activities, in order to ensure fair channel resource contention with other stations operated there.

In particular, the CST in preferred embodiments is set such that the exposed AP or STA is immune to strongly interfering non-adjacent channels activities, but, simultaneously is always aware of what happens either on its channel and adjacent ones.

In the following a CST setting mechanism according to one embodiment will be explained.

The mechanism comprises a method for detecting the exposed channel condition and a method for setting the CST threshold such as not to disrupt adjacent channel and co-channel activities but such as to be immune against non-adjacent channel interference

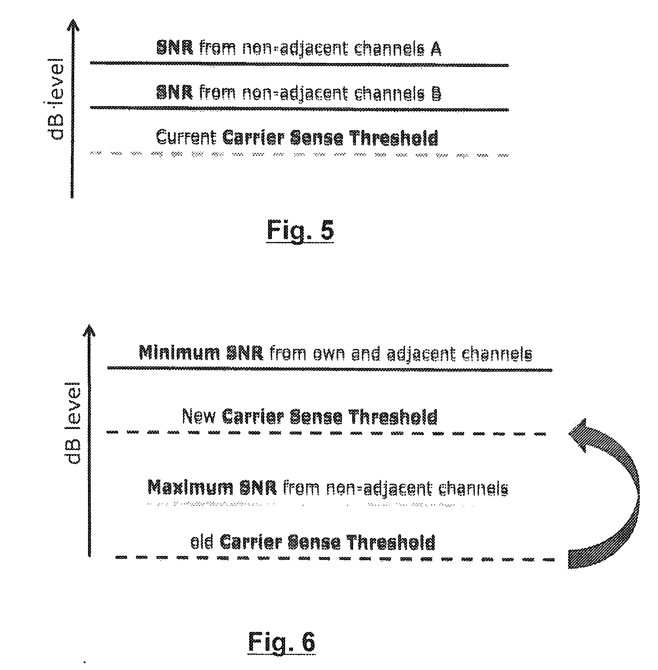

Fig. 5 schematically illustrates the mechanism for detecting the exposed channel condition. For that purpose the interference level on at least one non-adjacent channel, preferably on more than one non-adjacent channels is measured, e.g. by measuring the signal to noise ratio SNR. For example the operating channel may be X, then for the non-adjacent channels X-2 and X+2 is measured. Preferably one or more channels having a channel number higher than X are measured (which are indicated in Fig. 5 as channels A), and one or more channels having a channel number lower than X (indicated in Fig. 5 as channels B) are measured with respect to their SNR. In a simple embodiment only one non-adjacent channel having a channel number above X and one non-adjacent channel having a channel number below X are measured. This may e.g. result in a measurement as shown in Fig. 5. The SNR of channels A and B is then compared with the current CST, and in case where both channels A and channels B have a SNR higher than the current CST as shown in Fig. 5 it is judged that the exposed channel phenomenon exists for channel X. According to a further embodiment the judgement may also be made if only one of the measured SNRs of non-adjacent channels is higher than the current CST.

The detection of the exposed channel phenomenon may then in one embodiment trigger the adaptation of the CST. According to one embodiment other factors may also additionally or alternatively trigger the adaptation of the CST, e. g. a timer or the booting of the node.

According to one embodiment the re-setting of the CST is performed as shown in Fig. 6.

The CST is reset from the old carrier sense threshold to a new value larger than the maximum SNR which has been measured from non-adjacent channels but smaller than the minimum SNR value which has been measured for adjacent channels and the own channel. According to one embodiment the new CST is chosen as the average between the maximum SNR for non-adjacent channels and the minimum SNR measured for adjacent channels and the own channel. According to other embodiments, however, another value between the maximum and the minimum interference level ma also be chosen, e.g. at the minimum value plus 1/3 of the difference

Two specific cases should still be mentioned. If the minimum SNR on the adjacent channels and the own channel is zero or does not exceed the current CST or a default value which is smaller than the current CST, then setting the new CST to a value smaller than the minimum SNR for adjacent/own channels would actually lead to a decrease of the CST. In such a case, however, the CST is not set to a value smaller than the minimum SNR for adjacent/own channels but instead is set to a value larger than the maximum SNR of non-adjacent channels by some parameter $\alpha$.

In another case it may be assumed that the maximum SNR of non-adjacent channels is larger than at least one non-zero SNR of adjacent channels or the own channel. In this case it is not possible to reset the CST in a way which improves resistance against interference from non-adjacent channels without significantly disrupting the adjacent channels or the own channel. "non-zero" here may mean that the minimum SNR of adjacent or own channels is left out of consideration for the adaptation if it is either zero or below a certain threshold, whereas the threshold may lie somewhere between zero and the current CST. If it is beyond zero or the threshold, it is considered for the adaptation algorithm.

Now further embodiments of the invention will be described. The algorithm according to one embodiment measures the interference level on one or more non-adjacent channels of the channel on which the STA or AP is set. The interference level may be measured by measuring any suitable parameter such as the signal to noise ratio (SNR), the signal to interference noise ratio (SINR), the received signal strength indicator (RSSI), or any suitable parameter which gives an indication of the interference level. In the following embodiment the measured parameter is the RSSI (received signal strength) value which accounts for the perceived interference level.

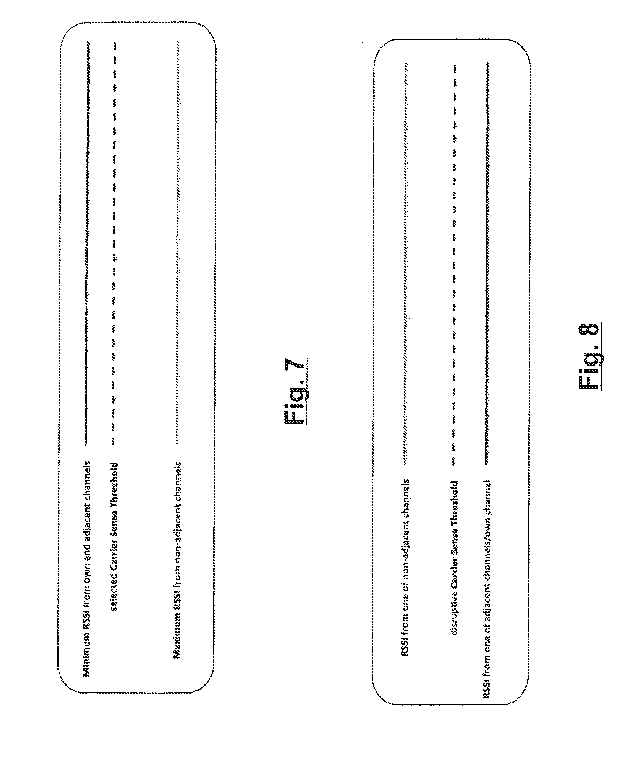

Each exposed-channel AP or STA operated on a specific channel X, by running the algorithm according to an embodiment of the invention will set its CST to a value (i) lower than the minimum received signal strength (for correctly decoded packets) measured on its own channel and on each adjacent channel - being the latter opportunely scaled by a coefficient $\Phi(<1)$ in order to account for the relative impact on channel X -, but (ii) greater than the maximum RSSI () measured on each non-adjacent partially overlapping channel - opportunely scaled by a coefficient $\Psi(<1)$ in order to account for the relative impact of these channels on channel X. This is schematically illustrated in Fig. 7. Specifically, by indicating adjacent channels as X-1 and X+1, and non-adjacent but partially overlapping channels as X-2, X+2, X-3, X+3, the carrier sense adaptation policy guarantees that:

$$CST > MAX\{RSSI(X+2)^* \Psi(X+2), RSSI(X-2)^* \Psi(X-2), RSSI(X+3)^* \Psi(X+3), RSSI(X-3)^* \Psi(X-3)\};$$

$$CST < MIN\{RSSI(X+1)^*\Phi(X+1), RSSI(X-1)^*\Phi(X-1), RSSI(X)\};$$

It should be noted that the correction parameters $\Phi(<1)$ and $\psi(<1)$ both here are optional, and may be chosen in a suitable manner, e.g. by choosing a fixed parameter for them which has been found suitable from experimental results.

The above formula does non include non-adjacent channels beyond X-3 and X+3, such as X-4 or X+4, because one may expect the interference from these channels to have no significant effect on the performance. In other embodiments, however, such further away channel may be considered as well.

According to one embodiment the above formula is applied with the constraint that, (a) whenever at least one between RSSI(X+1)*$\Phi$(X+1). RSSI(X-1)*$\Phi$(X-1), RSSI(X) is equal to 0, this is excluded from the computation of the minimum value; (b) whenever the scaled RSSI from at least one of non-adjacent channels (X±2, X±3) exceeds the scaled RSSI of at least one of adjacent channels (X±1) or RSSI as measured on own channel X, the algorithm execution is aborted. In this case, as illustrated in Fig. 8, whatever the CST value used to immunize against the source of interference, this would inevitably exceed RSSI of at least one of the networks operated on adjacent channels, thus becoming potentially harmful to them.

The algorithm according to one embodiment therefore adapts the CST to be a value between the lower and upper bounds reported above.

It should be noted that the proposed solution is devised to reduce unfair bandwidth repartition in dense and unplanned WLAN deployments. It gives exposed-channel stations the possibility to access the channel whereas nowadays WLAN scenarios cause unfair resource sharing because of inopportune WLAN-card carrier sense configuration.

The proposed solution ensures that other networks keep on providing an adequate service level to their users, while increasing the overall fairness among different channels.

It should be noted that the use of this mechanism can be extended to all CSMA-based channel access mechanisms and those protocols which adopt channel status assessments before packet transmission.

In the following there will be described a further embodiment in somewhat more detail.

The proposed mechanism aims at adapting Carrier Sense Threshold in order to achieve interference immunity against simultaneous transmissions on non-adjacent but partially overlapping channels, while preserving channel contention with stations operated on the same and on adjacent channels. The core algorithm can optionally include (i) periodical resetting of CST in order to cope with the newer/changed interference environment; (ii) different scanning mechanisms to measure RSSI on non-adjacent, adjacent and own channels: scan only a subset of channels; different scanning times on different channels; scan all channels.

Different CST setting mechanisms can be used as listed in the following: (i) set CST to average value between maximum RSSI measured on non-adjacent channels and minimum RSSI measured on adjacent and same channels (own or operating channel of the STA/AP); (ii) increase CST by fixed steps until interference immunity against non-adjacent channels is achieved while maintaining fair medium contention with stations on same and adjacent channels. Optionally, whenever the "exposed-channel" terminal is a STA, Power Save (PS) mode can be used in order to force its correspondent AP or other Independent Basic Service Set (IBSS) nodes (in case of Ad-Hoc network deployment) to store packets intended to it during scanning procedure. Before switching to other channels for RSSI measurements, one STA can send a PS message to advertise AP or other stations of the same IBSS to store packets for duration of the scanning procedure. This mechanism could prevent packet losses due to periodical channel switches that occur when incremental CST adjustment policy is adopted.

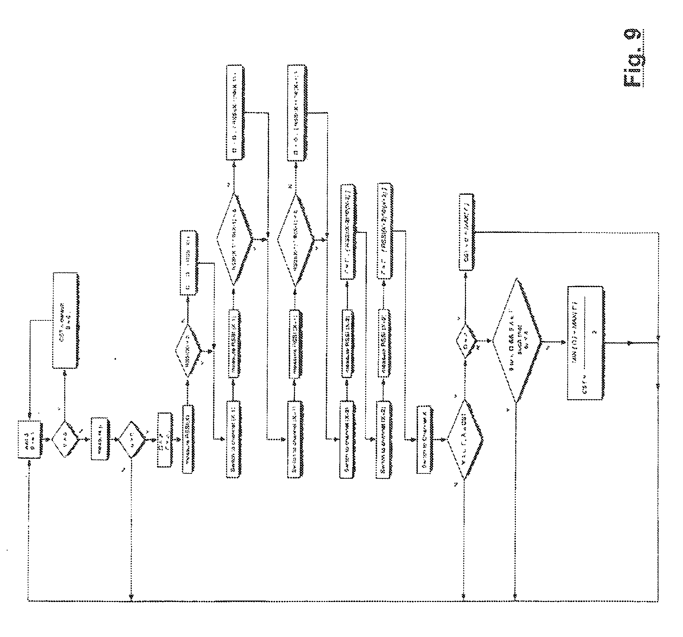

In the following an embodiment of the invention will be described in connection with Fig. 9 which shows an UML flowchart illustrating the steps followed by an embodiment in the case where periodical reset option is included and scanning on a limited subset of channels is performed (namely, channels X±1 and X±2), where X is the current channel of the AP or STA that performs the CST adaptation. Finally, CST setting policy is based on the selection of the average value between maximum RSSI measured on non-adjacent channels and minimum RSSI measured on adjacent and same channels.

The steps of he algorithm are as follows.

- **Step 1**: Measure the number "$\mu$" of busy time slots related to transmissions the AP or STA cannot decode. If it exceeds a certain threshold "$\eta$", initialize sets "$\Gamma$" and "$\Omega$" to empty set. Proceed to step 3 in order to investigate if this is caused by interference from other channels. Else increment variable "$\theta$" by one unit and wait for an amount of time equal to "$\beta$". Go to step 2.

- **Step 2**: if variable "$\theta$" is larger than a certain threshold "$\alpha$", then reset "$\theta$" to 0 and reset variable "CST" (Carrier Sense Threshold) to its default value. Wait for an amount of time equal to "$\beta$" and increment variable "$\theta$" by one unit. Finally go to step 1. Else go to step 1.

- **Step 3**: Measure average RSSI on channels X, X-1, X-2, X+1, X+2. In terms of frequency, adjacent and non-adjacent but partially overlapping channels are those whose central frequencies are respectively spaced ± 5MHz and ±10 MHz from the central frequency where the considered AP or STA is operated. In IEEE 802.11, channels have a center frequency separation of 5MHz and occupy a bandwidth of 22MHz. For adjacent channels X+1 and X-1 scale the measured RSSI value of a quantity respectively equal to "$\psi(X+1)$" and $\psi(X-1)$" in order to properly account for their noise impact on channel X. For non-adjacent but partially overlapping channels X+2 and X-2, scale the measured RSSI value by a quantity respectively equal to "$\Phi(X+2)$" and "$\Phi(X-2)$" in order to properly account for their noise impact on channel X. Fill set "$\Omega$" with those RSSI values measured on own channel X and on adjacent channels X-1 and X+1 which are not less than "$\delta$" dBm. Fill set "$\Gamma$" with scaled average RSSI values measured on channels X-2 and X+2. Switch to operating channel X and go to step 4.

- **Step 4**: Check if every element of set "$\Gamma$" exceeds "CST". If so, then go to step 5. Else wait for an amount of time equal to "$\beta$" and increment "$\theta$" by one unit. Go to step 1.

- **Step 5**: Check if set "Ω" is empty. If it is go to step 6. Otherwise, go to step 7.
- **Step 6**: Set "CST" equal to "σ" dBm plus the maximum RSSI value present in set "Γ", i.e., MAX{Γ}. Wait for an amount of time equal to "β" and increment "θ" by one unit. Go to step 1.
- **Step 7**: Check if there is at least one element in set "Γ" that exceeds at least one element in set "Ω". If there is, no "CST" value can help with the exposed-channel condition (figure 5). Wait for an amount of time equal to "β" and increment "θ" by one unit. Go back to step 1. Otherwise, go to step 8.
- **Step 8**: Set "CST" to the average value taken between MIN{ Ω } and MAX{ Γ }. Wait for an amount of time equal to "β" and increment "θ" by one unit. Go to step 1.

It should be noted that the carrier sense threshold adaptation algorithm according to one embodiment resets the default Carrier Sense Threshold either when the algorithm may prove ineffective because of an unacceptable level of inter-channel interference, or when a time interval equal to "β*α" is elapsed. In the latter case, the reset is done in order to verify if, after a certain amount of time, interference from other APs is decreased and then the default Carrier Sense Threshold value may be appropriate in those channel conditions. Instead of a full immediate reset, it is also possible to gradually lower the value. These operations, however, are optional.

The algorithm is intended to guarantee channel access fairness in dense AP deployments and aims at guaranteeing a minimum allocation of bandwidth to those nodes that otherwise would be unable to transmit because of too conservative default settings.

The advantages achievable with the embodiments of the present invention are the following: in high density non-coordinated WLAN deployments, the mechanism allows reducing unfair bandwidth repartition for APs and STAs operated on exposed-channels, thus compensating the cost of a slightly higher per-packet error probability on other interfering channels. From the network operator (NO) perspective, this solution can significantly reduce network management issues deriving from incorrect AP configurations that may prevent network usage. The solution is compliant with the IEEE 802.11 standard and requires software modifications to concerned APs/STAs only. The modified APs/STAs can still coexist with legacy 802.11 terminals.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computing device or a mobile phone or any mobile device or mobile station or node which is suitably programmed such that it is able to carry out a method as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

**Claims**

1. A method for adaptively setting the carrier sense threshold of a node in a wireless network having a plurality of channels, said node operating on certain one of said channels, said method being **characterized by** being **characterized by** comprising:

   measuring by said node the interference level in at least one channel which is non-adjacent to the operating channel of said node;
   setting the carrier sense threshold of said node to a value larger than said measured interference level of said non-adjacent channel.

2. The method of claim 1, wherein said interference level is measured for a plurality of non-adjacent channels of said node, and said carrier sense threshold of said node is set to a value larger than the maximum of said measured interference values.

3. The method of claim 1 or 2, wherein said carrier sense threshold is changed from its current value only if more than one non-adjacent channels have a interference value larger than the current carrier sense threshold.

4. The method of claim 1, 2 or 3, further comprising:

measuring the interference level of the adjacent channels and/or of said operating channel; and
setting said carrier sense threshold to a value smaller than the minimum interference value measured for said adjacent channels and/or said operating channel which is larger than a certain threshold.

5. The method of one of the preceding claims, wherein said carrier sense threshold resetting is performed only if the current carrier sense threshold is below the minimum interference level of said non-adjacent channels and/or own channel which is beyond a certain threshold.

6. The method of one of the preceding claims, further comprising:

measuring the interference level of a plurality of non-adjacent channels;
re-setting the carrier sense threshold such that it is set beyond the maximum value of the interference levels measured for said non-adjacent channels and below the minimum interference value measured for adjacent channels and the operating channel itself which is larger than a certain threshold.

7. The method of one of the preceding claims, wherein
said measured minimum interference level of adjacent channels and/or the operating channel is corrected by a correction factor smaller than one before it is used for determining the new value to which the carrier sense threshold is set; and/or
said measured maximum interference level of non-adjacent channels is corrected by a correction factor smaller than one before it is used for determining the new value to which the carrier sense threshold is set.

8. The method of one of the preceding claims, wherein
instead of setting said carrier sense threshold directly to a value larger than the maximum interference value of non-adjacent channels, said carrier sense threshold is incrementally increased until it is determined that the impact of the interference of non-adjacent channels on said operating channel has improved.

9. An apparatus for adaptively setting the carrier sense threshold of a node in a wireless network having a plurality of channels, said node operating on certain one of said channels, said apparatus being **characterized by** comprising:

a module for measuring by said node the interference level in at least one channel which is non-adjacent to the operating channel of said node;
a module for setting the carrier sense threshold of said node to a value larger than said measured interference level of said non-adjacent channel.

10. The apparatus of claim 9, wherein said interference level is measured for a plurality of non-adjacent channels of said node, and said carrier sense threshold of said node is set to a value larger than the maximum of said measured interference values.

11. The apparatus of claim 9 or 10, wherein said carrier sense threshold is changed from its current value only if more than one non-adjacent channels have a interference value larger than the current carrier sense threshold.

12. The apparatus of claim 9, 10 or 11, further comprising:

a module for measuring the interference level of the adjacent channels and/or of said operating channel; and
a module for setting said carrier sense threshold to a value smaller than the minimum interference value measured for said adjacent channels and/or said operating channel which is larger than a certain threshold.

13. The apparatus of one of claims 9 to 12, further comprising:

a module for carrying out a method according to one of claims 5 to 7.

14. The apparatus of one of claims 9 to 13, wherein said carrier sense threshold resetting is performed only if the current carrier sense threshold is below the minimum interference level of said non-adjacent channels and/or own channel which is beyond a certain threshold.

15. A computer program comprising computer program code which when being executed on a computer enables said computer to carry out a method according to one of claims 1 to 8.

**Patentansprüche**

1. Verfahren zum adaptiven Einstellen des Trägererkennungsschwellwertes eines Knotens in einem drahtlosen Netzwerk, das eine Mehrzahl von Kanälen aufweist, wobei der Knoten für den Betrieb mit einem bestimmten der Kanäle ausgelegt ist, wobei das Verfahren **dadurch gekennzeichnet ist, dass** es umfaßt:

   Messen des Interferenzpegels durch den Knoten in zumindest einem Kanal, der nicht zum Betriebskanal des Knotens benachbart ist;
   Einstellen des Trägererkennungsschwellwertes des Knotens auf einen Wert, der größer ist als der gemessene Interferenzpegel des nicht benachbarten Kanals.

2. Verfahren nach Anspruch 1, wobei der Interferenzpegel für eine Mehrzahl nicht benachbarter Kanäle des Knotens gemessen wird und der Trägererkennungsschwellwert des Knotens auf einen Wert eingestellt wird, der größer ist als das Maximum der gemessenen Interferenzwerte.

3. Verfahren nach Anspruch 1 oder 2, wobei der Trägererkennungsschwellwert nur dann von seinem gegenwärtigen Wert geändert wird, wenn mehr als ein nicht benachbarter Kanal einen Interferenzwert aufweist, der größer ist als der gegenwärtige Trägererkennungsschwellwert.

4. Verfahren nach Anspruch 1, 2 oder 3, ferner umfassend:

   Messen des Interferenzpegels der benachbarten Kanäle und/oder des Betriebskanals; und
   Einstellen des Trägererkennungsschwellwertes auf einen Wert, der kleiner ist als der für die benachbarten Kanäle und/oder den Betriebskanal gemessene minimale Interferenzwert, der größer ist als ein bestimmter Schwellwert.

5. Verfahren nach einem der vorhergehenden Ansprüche, wobei die Rücksetzung des Trägererkennungsschwellwertes nur dann durchgeführt wird, wenn der gegenwärtige Trägererkennungsschwellwert unterhalb des minimalen Interferenzpegels der nicht benachbarten Kanäle und/oder des eigenen Kanals liegt, der jenseits eines bestimmten Schwellwerts liegt.

6. Verfahren nach einem der vorhergehenden Ansprüche, ferner umfassend:

   Messen des Interferenzpegels einer Mehrzahl nicht benachbarter Kanäle;
   Rücksetzen des Trägererkennungsschwellwerts, so dass er auf jenseits des maximalen Wertes des für die nicht benachbarten Kanäle gemessenen Interferenzpegels und auf unterhalb des für die benachbarten Kanäle und den Betriebskanal gemessenen minimalen Interferenzwertes eingestellt ist, der größer ist als ein bestimmter Schwellwert.

7. Verfahren nach einem der vorhergehenden Ansprüche, wobei
   der gemessene minimale Interferenzpegel benachbarter Kanäle und/oder des Betriebskanals um einen Korrekturfaktor korrigiert wird, der kleiner als Eins ist, bevor er zum Ermitteln des neuen Wertes verwendet wird, auf den der Trägererkennungsschwellwert eingestellt ist; und/oder
   der gemessene maximale Interferenzpegel nicht benachbarter Kanäle um einen Korrekturfaktor korrigiert wird, der kleiner als Eins ist, bevor er zum Ermitteln des neuen Wertes verwendet wird, auf den der Trägererkennungsschwellwert eingestellt ist.

8. Verfahren nach einem der vorhergehenden Ansprüche, wobei,
   anstatt den Trägererkennungsschwellwert direkt auf einen Wert einzustellen, der größer ist als der maximale Interferenzwert nicht benachbarter Kanäle, der Trägererkennungsschwellwert inkrementell erhöht wird, bis ermittelt wird, dass sich die Wirkung der Interferenz nicht benachbarter Kanäle auf den Betriebskanal verbessert hat.

9. Vorrichtung zum adaptiven Einstellen des Trägererkennungsschwellwertes eines Knotens in einem drahtlosen Netzwerk, das eine Mehrzahl von Kanälen aufweist, wobei der Knoten für den Betrieb mit einem bestimmten der Kanäle ausgelegt ist, wobei die Vorrichtung **dadurch gekennzeichnet ist, dass** sie umfaßt:

   ein Modul zum Messen des Interferenzpegels durch den Knoten in zumindest einem Kanal, der nicht zum Betriebskanal des Knotens benachbart ist;

ein Modul zum Einstellen des Trägererkennungsschwellwertes des Knotens auf einen Wert, der größer ist als der gemessene Interferenzpegel des nicht benachbarten Kanals.

10. Vorrichtung nach Anspruch 9, wobei der Interferenzpegel für eine Mehrzahl nicht benachbarter Kanäle des Knotens gemessen wird und der Trägererkennungsschwellwert des Knotens auf einen Wert eingestellt wird, der größer ist als das Maximum der gemessenen Interferenzwerte.

11. Vorrichtung nach Anspruch 9 oder 10, wobei der Trägererkennungsschwellwert nur dann von seinem gegenwärtigen Wert geändert wird, wenn mehr als ein nicht benachbarter Kanal einen Interferenzwert aufweist, der größer ist als der gegenwärtige Trägererkennungsschwellwert.

12. Vorrichtung nach Anspruch 9, 10 oder 11, ferner umfassend:

ein Modul zum Messen des Interferenzpegels der benachbarten Kanäle und/oder des Betriebskanals; und ein Modul zum Einstellen des Trägererkennungsschwellwertes auf einen Wert, der kleiner ist als der für die benachbarten Kanäle und/oder den Betriebskanal gemessene minimale Interferenzwert, der größer ist als ein bestimmter Schwellwert

13. Vorrichtung nach einem der Ansprüche 9 bis 12, ferner umfassend:

ein Modul zum Durchführen eines Verfahrens nach einem der Ansprüche 5 bis 7.

14. Vorrichtung nach einem der Ansprüche 9 bis 13, wobei die Rücksetzung des Trägererkennungsschwellwertes nur dann durchgeführt wird, wenn der gegenwärtige Trägererkennungsschwellwert unterhalb des minimalen Interferenzpegels der nicht benachbarten Kanäle und/oder des eigenen Kanals liegt, der jenseits eines bestimmten Schwellwerts liegt.

15. Computerprogramm, umfassend Computerprogrammcode, das, wenn es auf einem Computer ausgeführt wird, es dem Computer ermöglicht, ein Verfahren nach einem der Ansprüche 1 bis 8 durchzuführen.

**Revendications**

1. Procédé destiné à définir de manière adaptative le seuil de détection de porteuse d'un noeud dans un réseau sans fil comportant une pluralité de canaux, ledit noeud opérant sur un certain canal desdits canaux, ledit procédé étant **caractérisé en ce qu'**il comporte les étapes ci-dessous consistant à :

mesurer, par le biais dudit noeud, le niveau de brouillage dans au moins un canal non adjacent au canal opérationnel dudit noeud ; régler le seuil de détection de porteuse dudit noeud à une valeur supérieure audit niveau de brouillage mesuré dudit canal non adjacent.

2. Procédé selon la revendication 1, dans lequel ledit niveau de brouillage est mesuré pour une pluralité de canaux non adjacents dudit noeud, et ledit seuil de détection de porteuse dudit noeud est réglé à une valeur supérieure au maximum desdites valeurs de brouillage mesurées.

3. Procédé selon la revendication 1 ou 2, dans lequel ledit seuil de détection de porteuse est modifié par rapport à sa valeur en cours uniquement lorsque plus d'un canal non adjacent présente une valeur de brouillage supérieure au seuil de détection de porteuse en cours.

4. Procédé selon la revendication 1, 2 ou 3, comprenant en outre les étapes ci-dessous consistant à :

mesurer le niveau de brouillage des canaux adjacents et/ou dudit canal opérationnel ; et régler ledit seuil de détection de porteuse à une valeur inférieure à la valeur de brouillage minimale mesurée pour lesdits canaux adjacents et/ou ledit canal opérationnel, laquelle est supérieure à un certain seuil.

5. Procédé selon l'une quelconque des revendications précédentes, dans lequel ledit re-réglage de seuil de détection de porteuse n'est mis en oeuvre que si le seuil de détection de porteuse en cours est inférieur au niveau de brouillage minimum desdits canaux non adjacents et/ou du canal propre, lequel est supérieur à un certain seuil.

6. Procédé selon l'une quelconque des revendications précédentes, comprenant en outre les étapes ci-dessous consistant à :

mesurer le niveau de brouillage d'une pluralité de canaux non adjacents ;
re-régler le seuil de détection de porteuse, de sorte qu'il soit défini de manière à être supérieur à la valeur maximale des niveaux de brouillage mesurés pour lesdits canaux non adjacents et inférieur à la valeur de brouillage minimale mesurée pour les canaux adjacents et le canal opérationnel lui-même, laquelle est supérieure à un certain seuil.

7. Procédé selon l'une quelconque des revendications précédentes, dans lequel
ledit niveau de brouillage minimum mesuré de canaux adjacents et/ou du canal opérationnel est corrigé par un facteur de correction inférieur à un, avant qu'il ne soit utilisé pour déterminer la nouvelle valeur sur laquelle le seuil de détection de porteuse est défini ; et/ou
ledit niveau de brouillage maximum mesuré de canaux non adjacents est corrigé par un facteur de correction inférieur à un, avant qu'il ne soit utilisé pour déterminer la nouvelle valeur sur laquelle le seuil de détection de porteuse est défini.

8. Procédé selon l'une quelconque des revendications précédentes, dans lequel
au lieu de régler ledit seuil de détection de porteuse directement à une valeur supérieure à la valeur de brouillage maximale de canaux non adjacents, ledit seuil de détection de porteuse est progressivement incrémenté jusqu'â ce qu'il soit déterminé que l'effet du brouillage de canaux non adjacents sur ledit canal opérationnel s'est amélioré.

9. Dispositif destiné à régler de manière adaptative le seuil de détection de porteuse d'un noeud dans un réseau sans fil comportant une pluralité de canaux, ledit noeud opérant sur un certain canal desdits canaux, ledit dispositif étant **caractérisé en ce qu'**il comporte :

un module pour mesurer, par le biais dudit noeud, le niveau de brouillage dans au moins un canal non adjacent au canal opérationnel dudit noeud;
un module pour régler le seuil de détection de porteuse dudit noeud à une valeur supérieure audit niveau de brouillage mesuré dudit canal non adjacent.

10. Dispositif selon la revendication 9, dans lequel ledit niveau de brouillage est mesuré pour une pluralité de canaux non adjacents dudit noeud, et ledit seuil de détection de porteuse dudit noeud est réglé à une valeur supérieure au maximum desdites valeurs de brouillage mesurées.

11. Dispositif selon la revendication 9 ou 10, dans lequel ledit seuil de détection de porteuse est modifié par rapport à sa valeur en cours uniquement lorsque plus d'un canal non adjacent présente une valeur de brouillage supérieure au seuil de détection de porteuse en cours.

12. Dispositif selon la revendication 9, 10 ou 11, comprenant en outre :

un module pour mesurer le niveau de brouillage des canaux adjacents et/ou dudit canal opérationnel ; et
un module pour régler ledit seuil de détection de porteuse sur une valeur inférieure à la valeur de brouillage minimale mesurée pour lesdits canaux adjacents et/ou ledit canal opérationnel, laquelle est supérieure à un certain seuil.

13. Dispositif selon l'une quelconque des revendications 9 à 12, comprenant en outre :

un module pour mettre en oeuvre un procédé selon l'une quelconque des revendications 5 à 7.

14. Dispositif selon l'une quelconque des revendications 9 à 13, dans lequel ledit re-réglage de seuil de détection de porteuse n'est mis en oeuvre que si le seuil de détection de porteuse en cours est inférieur au niveau de brouillage minimum desdits canaux non adjacents et/ou du canal propre, lequel est supérieur à un certain seuil.

15. Programme informatique comprenant un code de programme informatique lequel, lorsqu'il est exécuté sur un ordinateur permet audit ordinateur de mettre en oeuvre un procédé selon l'une quelconque des revendications 1 à 8.

**Fig. 1A**

**Fig. 1B**

EP 2 217 030 B1

**Fig. 2**

Fig. 3

Fig. 4

SNR from non-adjacent channels A

SNR from non-adjacent channels B

Current Carrier Sense Threshold

dB level

Fig. 5

Minimum SNR from own and adjacent channels

New Carrier Sense Threshold

Maximum SNR from non-adjacent channels

old Carrier Sense Threshold

dB level

Fig. 6

Minimum RSSI from own and adjacent channels

selected Carrier Sense Threshold

Maximum RSSI from non-adjacent channels

**Fig. 7**

RSSI from one of non-adjacent channels

disruptive Carrier Sense Threshold

RSSI from one of adjacent channels/own channel

**Fig. 8**

20

Fig. 9

Fig. 10

EP 2 217 030 B1

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050129051 A1

**Non-patent literature cited in the description**

- **Petrova M.** Interference Measurements on Performance Degradation between Colocated IEEE 802.11g/n and IEEE 802.15.4 Networks. *NETWORKING, 2007, ICN '07, SIXTH INTERNATIONAL CONFERENCE ON IEEE, PI,* 22 April 2007, 93